# EUROPEAN PATENT APPLICATION

(11) **EP 1 691 535 A1**
(43) Date of publication of application: **16.08.2006**
(21) Application number: 05290327.5
(22) Date of filing: 14.02.2005
(51) Int. Cl.: H04M 1/725

(54) **A method for displaying an image present on a surface of a smartcard or a sim**

(71) Applicant: Axalto S.A., 92120 Montrouge (FR)
(72) Inventor: Sion, Jérôme Axalto SA, 92120 Montrouge (FR)
(74) Representative: Jacquot, Ludovic R. G.

(57) **Abstract**

The invention relates to a method for enhancing presentation of an illustrative entity which is carried visually on a retrievable authentication token assembly (11) said retrievable authentication token assembly comprising at least a part which is to be inserted in a mobile telecommunication terminal (12) characterized in that said method includes the steps consisting in:
e) providing memorized data in said authentication token which data represent said illustrative entity;
f) inserting at least part of said authentication token body into a mobile telecommunication terminal;
g) reading said data in the card with said mobile telecommunication terminal;
displaying the illustrative entity as represented by the read data on a screen of the mobile telecommunication terminal (18) so that a user of the mobile telecommunication terminal recognizes the same illustrative entity as initially displayed on the authentication token assembly on the screen of the mobile telecommunication terminal.

## Description

The invention relates to retrievable authentication tokens which are inserted into mobile telecommunication handsets. These tokens are typically smart cards or SIM (Subscriber Identity Module) cards and the mobile telecommuncition handsets are typically mobile phones.

The invention however also relates to other types of retrievable authentication tokens such as USB keys or sticks and/or other types of telecommunication handsets such as PDAs i.e. Personal Digital Assistants.

Such tokens are typically delivered to a subscriber simultaneously to the purchase of the handset.

The smart card assemblies are typically wrapped in a protective envelope of plastic and let to the subscriber so that the subscriber proceeds himself to unwrapping of the token and insertion into the handset. When the token assembly is a SIM card assembly according to international standards, the user also typically separates the insertable part of the SIM card assembly from a remaining and surrounding part of the assembly.

Such tokens are therefore handled and observed during a few seconds or minutes by the user before or during insertion. During the insertion process, the subscriber is very cautious about his handling and performs an attentive glance at the token. That's why token manufacturers such as SIM card manufacturers use to place advertising messages such as logos or even friendly images on the tokens. Such logos are typically the logo of the phone operator.

It appears however that such advertising messaging is too brief. In addition the token is usually non retrieved until the end of the life time of the handset. Therefore few additional hand and eye contacts with the token take place after the first insertion of it.

It is an aim of the invention to enhance the initial visual effect performed by exposure of an authentication token. It is another aim of the invention to prevent the subscriber from forgetting too quickly the illustrative entity he has glanced at while inserting the token in the handset.

To this end it is proposed according to the invention a method and a device as recited in the appended claims.

Other features and advantages of the present invention will become apparent from the following description which will be taken in conjunction with the accompanying drawings.

In the drawings :
- figure 1 depicts a SIM card assembly according to the invention;
- figure 2 is a flowchart illustrating a series of successive steps which are carried out according to a preferred embodiment of the invention ;
- figures 3a to 3c depict a display screen of a mobile phone hosting the SIM card of figure 1 in different successive memory states of the card.

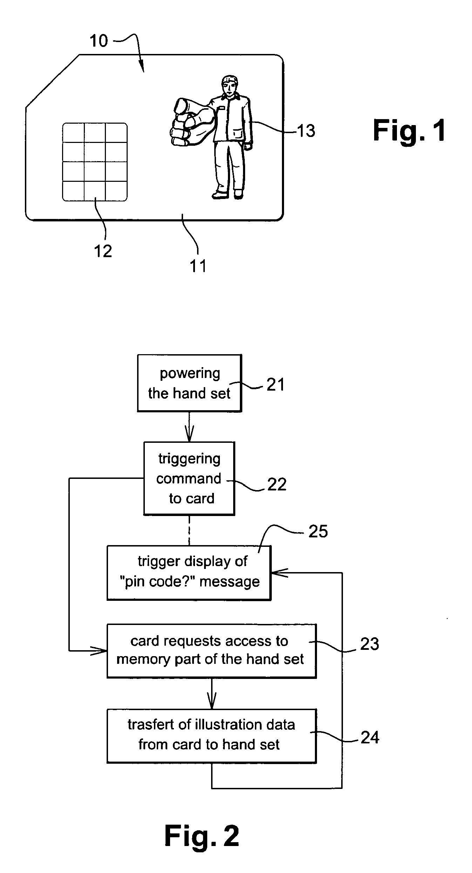

As illustrated on figure 1, a SIM card assembly 10 is provided which typically consists in a an insertable card body 11 on which is fixed a chip 12.

The card body assembly 10 is typically a rectangle with one of its corners laking for easier insertion in a receiving equipment of the handset.

The chip 12 expands around half the surface of the card body 11. The rest of the surface of the card body 11 is typically free for supporting illustrative entity such as the example of illustrative entity 13 on figure 1. In the present case illustrative entity 13 depicts a character with typical physical patterns.

In an alternate embodiment of the invention, the illustrative entity may be carried by the part of the card which surrounds such pluggable card body and which is separated from the pluggable card body for being discarded.

Such typical patterns of illustrative entity 13 will be considered in the rest of the description as symbolizing a phone operator.

The invention is not limited to a given type of illustration. Any type of illustrative entity which may be initially present on a face of the card may be used in the frame of the invention, such as any type of logo, any type of written message or written noun, either colored or not, or even any type of illustrative entity or photograph.

Figure 2 is a flowchart on which some steps are depicted which correspond to successive tasks as processed by the handset and the chip of the card in response to first insertion of the SIM card in the handset.

Step 21 consists is first powering the handset after insertion of the card.

The handset then typically sends a predefined triggering command 22 to the card.

This triggering command 22 is usually responded to by an APDU request from the smart card assembly 10 which triggers display on the handset of a message requesting pin code to the user.

In the presently described preferred embodiment of the invention, the first triggering command 22 from the handset is answered by a command 23 from the card which requests access to some particular part of the memory of the handset which memory is dedicated to hosting illustrative entity data for display.

Once access to such part of the memory of the handset is obtained, the card performs a transfer 24 of illustrative entity data from its own memory to the said memory part of the handset.

In case the illustrative entity memory part of the handset already includes data, said data are replaced by the illustrative entity data coming from the card.

After the data transfer, the card launches a trigger command to the handset as to display of the stored image. In the present case, said trigger command is easily implemented under Sim Toolkit type of exchanges between card and handset..

Said Sim toolkit command includes a duration data which imposes to the handset a duration for keeping the illustrative entity present on the screen of the handset.

After a first duration of display of the illustration, which duration is set by the settings data of the command from the card, the usual request for Pin code is displayed by the handset at step 25.

The usual message requesting for PIN code is thus displayed on the screen of the handset in replacement of the illustrative entity 13 previously described in reference to figure 1.

The transferred and displayed illustrative entity data correspond to the illustrative entity 13 which is physically illustrated on a face of the sim card of figure 1.

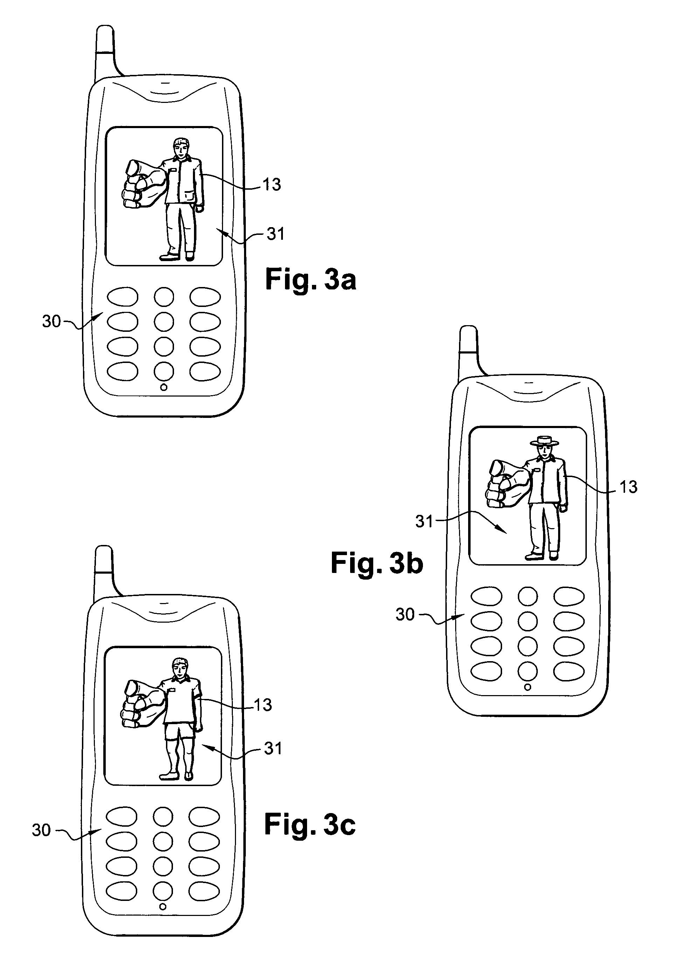

As represented on figure 3a, the operator symbolizing illustrative entity 13 therefore appears on screen 31 of a phone handset 30 hosting said smart card assembly 10 and therefore appears to the subscriber as a reminder of the illustrative entity he saw previously on the SIM card.

This way, the subscriber gets once more in touch with the illustrative entity previously glanced at. Such second signaling of an illustrative entity under a second type of illustrative entity mode proves to be particularly efficient for sensibilising the subscriber.

So as to enhance the illustrative impact of such second signaling, the illustrative entity data can be replaced by an application stored in the card or in the handset which displays a movement of the symbolizing illustration. In the present embodiment illustrative entity 13 which symbolizes the operator may perform a particular movement like a gesture of his forehand or a dance step.

Another advantage of displaying an illustrative entity provided by the card is to avoid the usual tricky settings of a handset as to the welcoming illustrative entity displayed on the screen. By storing such illustrative entity on the card and distributing the cards independently of the hosting handset, common settings can be implemented by a given operator on large parts of the handset fleet.

Another advantage of providing screen illustrations by means of data memorized in the card is to allow particular display of illustrations which are easily adapted to the subscriber, as a customizing setting of his card.

Such customizing can be performed through OTA messages (Over The Air) sent from a remote computer to the card via the handset..

Although described as appearing as soon as in response to the first powering of the handset, the displayed illustrative entity may also alternatively transferred from the card to a part of the memory of the handset which is dedicated to storage of a screen saver, i.e. to storage of an illustrative entity which is automatically displayed when the keypad of the phone is not actuated.

The usual configuration of the handset provides for reading of the content of said part of the memory after a given duration of non activity on the keypad, and display of the data read in such memory. The data transferred from the card to the dedicated memory part of the handset will therefore regularly be displayed by the phone.

Alternatively to said display of the data of an illustrative entity which have previously been transferred to the memory of the handset, the date corresponding to the illustrative entity may be repetitively read directly into the card everytime the screensaver has to be activated. In this case the handset fetches the data in the card after being redirected to the memory of the card. Said redirection is for example pre-programmed in the phone or programmed in the phone under control of a SIM toolkit command emitted by the card at first powering.

Displaying an illustrative entity provided by the card also allows easy updatings of such illustration.

The data file containing said illustrative entity data in the card can indeed be easily replaced by updated illustrative entity data thanks to OTA messages i.e. messages sent from a remote server to the card via Over The Air messages. Such OTA messages can for example be SMSC messages, i.e. messages of the SMS type which are not signaled to the subscriber.

Even after updating, the illustrative entity depicts the same recognizable entity as the entity illustrated on the face of the SIM card. Some slight alterations will constitute the updating of the image, such as for example placing a santa claus hat on the head of the represented character around Christmas period (figure 3b), or having the character wear soccer pants over the duration of a famous soccer cup (figure 3c).

The same type of variations may be introduced on a displayed entity corresponding to a logo or corresponding to a written message. The displayed illustrative entity will remain the same as far as the subscriber recognizes the entity which he has seen on the token.

Illustrative entity will be understood as being an illustrative entity which is recongisable by a user. Two images will be considered as representing a same entity if the entity can be mainly recognised as to its specific features on the two images.

Such entity will be either a logo, a character, a particular geometric shape, or even a character as an example.

## Claims

1. A method for enhancing presentation of an illustrative entity which is carried visually on a retrievable authentication token assembly said retrievable authentication token assembly comprising at least a part which is to be inserted in a mobile telecommunication terminal, **characterized in that** said method includes the steps consisting in :
a) providing memorized data in said authentication token which data represent said illustrative entity;
b) inserting at least part of said authentication token body into a mobile telecommunication terminal;
c) reading said data in the card with said mobile telecommunication terminal;
d) displaying the illustrative entity as represented by the read data on a screen of the mobile telecommunication terminal so that a user of the mobile telecommunication terminal recognizes the same illustrative entity as initially displayed on the authentication token assembly on the screen of the mobile telecommunication terminal.

2. The method according to claim 1, **characterized in that** said visually carried illustrative entity is carried on said at least part of the authentication token assembly which is inserted into the mobile telecommunication terminal.

3. The method according to claim 1, **characterized in that** the authentication token assembly is a smart card which includes a plug part and a surrounding support part associated together by destructible links, said visually carried illustrative entity being carried by said surrounding support part of the smart card.

4. The method according to anyone of the previous claims, **characterized in that** it includes the step consisting in storing said read data into a permanent memory of the mobile telecommunications terminal.

5. The method according to anyone of the previous claims, **characterized in that** it includes the step consisting in displaying said illustrative entity repetitively each time a predetermined amount of time without actuation of the terminal occurs.

6. An authentication token assembly comprising memory means at least part of which authentication token assembly is to be inserted in a mobile telecommunication handset, said authentication token assembly visually carrying an illustrative entity, **characterized in that** said data are stored which represent said illustrative entity in the memory of said authentification token assembly.

7. The authentication token assembly according to claim 6, **characterized in that** said visually carried illustrative entity is carried on said at least part of the authentication token assembly which is inserted into the mobile telecommunication terminal.

8. The authentication token assembly according to claim 6, **characterized in that** the authentication token is a smart card which includes a card body consisting in a plug part and a surrounding support part associated together by destructible links, said visually carried illustrative entity being carried by said surrounding support part of the smart card.

9. A system comprising an authentication token according to anyone of claims 6 to 8, **characterized in that** it includes a mobile telecommunications terminal equipped with a screen which terminal hosts said retrievable authentication token, said illustrative entity stored as data in the memory of said authentification token assembly being displayed on the screen of said terminal.
